# EUROPEAN PATENT APPLICATION

(11) **EP 3 738 982 A1**
(43) Date of publication of application: **18.11.2020**
(21) Application number: 19175205.4
(22) Date of filing: 17.05.2019
(51) Int. Cl.: C08B 1/00

(54) **PRODUCTION OF SHEETS COMPRISING FIBRILLATED CELLULOSE**

(71) Applicant: BillerudKorsnäs AB, 169 27 Solna (SE)
(72) Inventor: GÖRÜR, Yunus Can, 129 57 Hägersten (SE); LARSSON, Per, 182 31 Danderyd (SE); WÅGBERG, Lars, 115 45 Stockholm (SE)
(74) Representative: Kransell & Wennborg KB

(57) **Abstract**

There is provided a method of producing a sheet comprising fibrillated cellulose, comprising the steps of:
a) chemically modifying cellulose fibres to introduce a chargeable moiety and break the C₂-C₃ bond in at least part of the D-glucose units so as to obtain modified cellulose fibres having a charge density measured according to SCAN-CM 65:02 of 150-1500 µeq/g;
b) forming a fibre web by dewatering a slurry comprising the modified cellulose fibres; and
c) adding a base to the fibre web so as to obtain the sheet comprising fibrillated cellulose.

## Description

The present disclosure relates to the production of sheets comprising fibrillated cellulose.

### BACKGROUND

Recent advances in science and technology has created an environmental consciousness that shifted the societal and industrial focus towards green products and sustainable processes. This new approach was further fuelled by the scarcity of oil reserves, which gave an incentive to replace oil-based polymeric materials with the renewable and biodegradable materials. On the other hand, considering the fact that it was the excellent material properties and good processability of oil-based polymeric materials that established their market position, it is foreseeable that completely replacing these materials with their natural counterparts will not be an easy task.

Good barrier properties and processability, together with resistance to different environments and transparency are just some of the desired qualities for commonly used packaging materials, and oil-based polymeric materials indeed provide these qualities to a sufficient extent. To replace oil-based materials with renewable and bio-based materials, it is desirable to reach at least similar performance levels, and at a similar cost. One way to readily achieve this goal is to use naturally abundant polymers with existing industrially established large-scale production and processing protocols. In this respect, packaging grade papers are very promising candidates to facilitate this transformation from non-renewable to renewable while keeping a similar cost, since it is made of naturally occurring cellulose-rich fibres in already existing processes in the pulp and paper industry.

Besides being one of the most abundant biopolymers on Earth, cellulose attracts considerable attention due to its high strength and stiffness combined with features like low weight, biodegradability and renewability. One of the promising new material streams of cellulose is the production and use of cellulose nanofibrils (CNFs) prepared from wood biomass. CNFs have desired properties, such as high aspect ratio and small dimensions, which not only enables strong and transparent barrier films for applications such as packaging, but also allows for an advanced bottom-up engineering of complex materials. Aside from its small size, an important feature of CNFs is their hydrophilicity, which is a great advantage for processing in aqueous media. However, this affinity for water combined with the small size of CNFs is also the reason for very long dewatering times, or energy demanding evaporation protocols, which to a large extent is what inhibits the feasible production of dry CNF-based materials on an industrial scale. In general, smaller fibre dimensions lead to better properties at the expense of longer processing times, which limits commercialization of nanocellulosic materials to a great extent.

### SUMMARY

An object of the present disclosure is to overcome problems of the prior art.

There is thus provided a method of producing a sheet comprising fibrillated cellulose, comprising the steps of:
a) chemically modifying cellulose fibres to introduce a chargeable moiety and break the C₂-C₃ bond in at least part of the D-glucose units so as to obtain modified cellulose fibres having a charge density measured according to SCAN-CM 65:02 of 150-1500 µeq/g;
b) forming a fibre web by dewatering a slurry comprising the modified cellulose fibres; and
c) adding a base to the fibre web so as to obtain the sheet comprising fibrillated cellulose.

The chemical modifications of the present disclosure allow for use of conventional papermaking methods in combination with a simple pH modification to achieve fibrillation on an already formed fibre web/paper. Delaying the fibrillation of the fibres until after sheet forming effectively eliminates or at least reduces the disadvantage of long dewatering times, while a "nanopaper" having advantageous properties is still obtained.

### BRIEF DESCRIPTION OF THE DRAWINGS

Aspects and embodiments are now described, by way of example, with reference to the accompanying drawings, in which:
Fig. 1 shows the reaction scheme of (i) oxidation of C₆ to introduce a carboxyl group, followed by (ii) periodate oxidation of the secondary alcohols in positions C₂ and C₃ to introduce two vicinal aldehydes.
Fig. 2 shows the level of fibrillation of modified fibres with respect to pH.

### DETAILED DESCRIPTION

There is provided a method of producing a sheet comprising fibrillated cellulose. The method comprises the step of:
a) chemically modifying cellulose fibres to introduce a chargeable moiety and break the C₂-C₃ bond in at least part of the D-glucose units so as to obtain modified cellulose fibres having a charge density of 150-1500 µeq/g.

Charge density is measured by conductometric titration according to SCAN-CM 65:02.

The cellulose fibres are preferably never dried fibres. Further, the fibres are preferably bleached fibres, such as bleached fibres from chemical pulping, e.g. Kraft pulping ("bleached kraft fibres"). The origin of the fibres is normally wood.

Whether the chargeable moiety is introduced before or after the breakage of the C₂-C₃ bond may depend on the chemistries used for step a). To avoid premature fibrillation, it is preferred that the reaction carried out last is not carried out at high pH, i.e. > pH 9. This means that if the introduction of the chargeable moiety is achieved by TEMPO oxidation at pH 10.5 (as in Example 1a below), it is preferably carried out before the breakage of the C2-C3 bond.

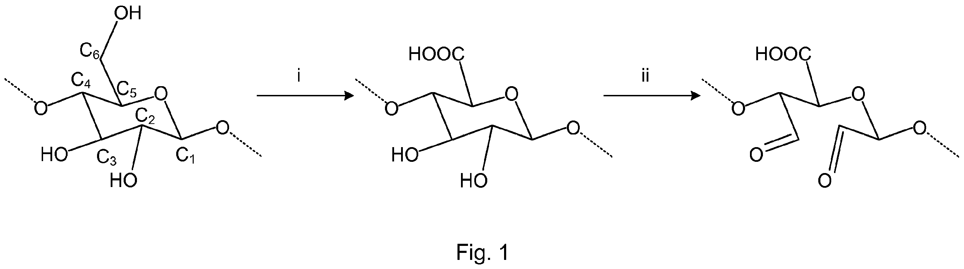

A periodate oxidation is a preferred way of breaking the C2-C3 bond. A periodate oxidation forms a dialdehyde (see Fig. 1). The periodate oxidation can be performed at room temperature, which gives a higher yield, and hence a higher charge, and carbonyl contents up to 8 mmol/g can be introduced without causing premature fibrillation. The periodate oxidation can also be performed at elevated temperature, such as 60 °C or 70 °C, which shortens the reaction time.

Examples of chemical reactions that introduce the chargeable moiety are TEMPO oxidation, chlorite oxidation, carboxymethylation, phosphorylation and sulfonation. The chlorite oxidation act on aldehydes and is therefore carried out subsequent to periodate oxidation. TEMPO oxidation, carboxymethylation, phosphorylation and sulfonation may be carried out before or after the periodate oxidation. It may however be preferred to carry out such chemistries before the periodate oxidation to ensure an aldehyde content in the final product.

Preferably the modified cellulose fibres obtained in step a) have a charge density of 200-900 µeq/g (i.e. 200-900 µmol/g of chargeable functional groups), such as 250-700 µeq/g. The carbonyl content of the modified cellulose fibres may be 1.0-7.0 mmol/g, such as 1.5-6.0 mmol/g, such as 1.5-5.0 mmol/g, such as 1.5-4.0 mmol/g. A drawback of a high conversion to carbonyls (i.e. breakage of a high proportion of the C2-C3 bonds) may be a low yield. Carbonyl content is measured according to a protocol based on Zhao et al. (Determination of degree of substitution of formyl groups in polyaldehyde dextran by the hydroxylamine hydrochloride method. Pharm. Res. 8:400-402 (1991)). Fibres (approximately 0.3 g (dry basis)) were suspended in water (75 ml) and the pH was adjusted to pH 4. Then, hydroxylamine hydrochloride solution (75 ml, 0.25 M) was adjusted to pH 4 and mixed together with the fibre suspension. The mixture was allowed to react for 2 h before the fibres were separated from the solution by filtration using a pre-weighed filter paper. The exact mass of the fibres was then determined by oven-drying of the filter paper and the carbonyl amount was determined by titration back to pH 4 with sodium hydroxide (0.10 M). Two to three independent oxidations were performed at each oxidation time, and each reaction with hydroxylamine hydrochloride was performed in triplicate.

The method further comprises the step of:
b) forming a fibre web by dewatering a slurry comprising the modified cellulose fibres.

To avoid premature fibrillation, the pH of the slurry of step b) is preferably below 9, such as 8 or lower, normally 4-8.

Step b) preferably comprises dewatering the slurry on a forming wire of a paper machine. It may further comprise dewatering the fibre web in a press section of a paper machine and/or drying the fibre web in a drying section of a paper machine. In a particularly preferred embodiment, step b) comprises all three steps, i.e. dewatering the slurry on a forming wire of a paper machine to form the fibre web, dewatering the fibre web in a press section of the paper machine and drying the fibre web from the press section in a drying section of the paper machine.

The method further comprises the step of:
c) adding a base to the fibre web so as to obtain the sheet comprising fibrillated cellulose.

The base may for example be an hydroxide of an alkali metal or an alkaline earth metal, such as sodium hydroxide (NaOH), potassium hydroxide (KOH), magnesium hydroxide Mg(OH)₂ or calcium hydroxide Ca(OH)₂. The base may for example also be ammonia or ammonium hydroxide. The base may for example also be salts of carbonates, carbanions, amides and hydrides, such as sodium carbonate (NaCO₃), sodium amide (NaNH₂), sodium borohydride (NaBH₄) or lithium borohydride (LiBH₄).

Step c) may be carried out online, i.e. in a paper machine, or offline, i.e. in an arrangement that is separate from the paper machine. In the online case, step c) may be carried out in the drying section, i.e. before the drying is completed, or downstream the drying section, e.g. between the drying section and a reel section. In the former case, the drying section can be used to remove water that is added to the fibre web together with the base (addition of aqueous base is further discussed below). In the latter case, such water can be removed by extra drying equipment arranged downstream the point of the addition according to step c).

The moisture content of the web just before the addition according to step c) may for example be 5-30 wt.%, such as 5-20 wt.%, such as 5-15 wt.%. Accordingly, the web may be dried in step b) to a moisture content is dried to a moisture content of 5-30 wt.%, such as 5-20 wt.%, such as 5-15 wt.%.

Alternatively, the moisture content of the web just before the addition according to step c) may for example be 40-60 wt.% since such a moisture content would facilitate the distribution of the base throughout the web.

In step c), the base may for example be added as an aqueous composition comprising alkali or another base. Such a composition may for example have a pH of 9.5-14, such as 10-14, such as 11-14, such as 12-14. The composition preferably comprises a polymer, such as starch, carboxymethylated cellulose (CMC) or polyvinyl alcohol (PVOH). In addition to the polymer, the composition may comprise a rheology modifier.

In one embodiment, step c) comprises spraying the composition onto the fibre web.

In an alternative or complementary embodiment, a size press is used for the addition of the composition. The viscosity the composition that is added in a size press is typically 10-1000 mPas, preferably 10-300 mPas, when measured as dynamic viscosity with a Brookfield rotational viscometer using spindle no.4 at 100 rpm and 25 °C according to the Brookfield instruction sheet.

According to another embodiment, a curtain coater or a direct rod coater is used for the addition of the composition. The viscosity of the composition that is added in a curtain coater is typically 100-800 mPas when measured as dynamic viscosity with a Brookfield rotational viscometer using spindle no.4 at 100 rpm and 25 °C according to the Brookfield instruction sheet.

According to yet another embodiment, a blade coater is used for the addition of the composition. The viscosity of the composition that is added in a blade coater is typically 400-1500 mPas when measured as dynamic viscosity with a Brookfield rotational viscometer using spindle no.4 at 100 rpm and 25 °C according to the Brookfield instruction sheet.

In an embodiment, the composition comprises a crosslinking agent, such as a zirconium-based cross-linker. The zirconium-based cross-linker may for example by a zirconium carbonate, such as ammonium zirconium carbonate or potassium zirconium carbonate. A specific example of a zirconium-based cross-linker is Zirlink available from Brenntag Nordic AB (Sweden). The inclusion of the zirconium-based cross-linker is of particular interest when the polymer of the composition comprises hydroxyl and/or carboxyl groups.

The composition may comprise CaCO₃ pigment. In such case, the result of adding the composition is not only that fibrillation is triggered, but also to that a pigment coating is formed on the web. Such a pigment composition may for example have a pH of 9-12, such as 10-12, such as 10-11. The pigment composition typically comprises a polymeric binder, such as starch or latex. The pigment composition may be added by any one of the coating techniques mentioned above (even if spraying is less preferred in case of a pigment composition). Appropriate viscosities for the respective method are also mentioned above. If a size press is used, the viscosity of the pigment composition is preferably 100-300 mPas when measured as dynamic viscosity with a Brookfield rotational viscometer using spindle no.4 at 100 rpm and 25 °C according to the Brookfield instruction sheet.

The method may further comprise the step of drying the sheet formed in step c). Thereby, a film having one or more of the following properties may be obtained:
a tensile strength of 90-170 MPa (measured on samples that were 5 mm wide and 100 µm thick at a straining rate of 3 mm/min using an Instron 5944, equipped with a 500 N load cell, in a controlled climate of 23 °C and 50% RH); a total transmittance of at least 70%, such as 70-90% measured at a wavelength of 550 nm with a Shimadzu UV-2550UV-vis spectrophotometer equipped with its integrating sphere accessory; and an oxygen permeability (OP) of less than 15 cm³ µm m⁻² d⁻¹ kPa⁻1 at 23°C and 50% RH, such as less than 10 cm³ µm m⁻² d⁻¹ kPa⁻1 at 23°C and 50% RH, such as less than 5 cm³ µm m⁻² d⁻¹ kPa⁻1 at 23°C and 50% RH, such as 0.05-5 cm³ µm m⁻² d⁻¹ kPa⁻1 at 23 °C and 50% RH, such as 0.5-5 cm³ µm m⁻² d⁻¹ kPa⁻1 at 23 °C and 50% RH (as measured on samples with 100 µm thickness according to ASTM D3985 and F1927 standards).

In an embodiment, the sheet comprising fibrillated cellulose is a layer of a multi-layered material. In such case, step b) may comprise forming the web on a substrate comprising cellulose fibres. For such a formation, the slurry comprising the modified cellulose fibres may be sprayed onto a forming web comprising cellulose fibres. Alternatively, the slurry comprising the modified cellulose fibres may be added to a forming web comprising cellulose fibres by means of a headbox, such as a stratified headbox that is also used for the forming web. Yet another alternative is to form the fibre web from the slurry comprising the modified cellulose fibres on a first wire, while a second wire is used to form a second fibre web, which second fibre web is subsequently adhered to the fibre web from the slurry comprising the modified cellulose fibres, preferably by couching.

### EXAMPLES

### Example 1a

### Alkaline TEMPO-mediated oxidation of fibres

TEMPO oxidation of never-dried bleached softwood kraft pulp (ND BSKP) from Billerudkosnäs AB (Gruvön pulp mill, Grums, Sweden) was performed in alkaline media in order to predominantly introduce carboxyl groups to the C6 position on cellulose. Amounts of 0.1 mmol 2,2,6,6-tetramethyl-1-piperidineyloxy (TEMPO), 1 mmol sodium bromide (NaBr) and 9.7 mmol sodium hypochlorite (NaClO) per gram of dry fibre were added to a 12 g/L fibre suspension and kept to react for 1.5 h under gentle stirring at room temperature. The reaction pH was maintained at 10.5 by periodically dropwise addition of 0.5 M NaOH to the suspension. The reaction was terminated by filtering off the chemicals followed by thorough washing with deionized water and resulted in fibres with a total charge of 1.3 mmol/g, corresponding to 1300 µeq/g. The TEMPO oxidation is further illustrated in Fig. 1, step (i).

### Periodate oxidation of TEMPO-oxidized fibres in Example 1a

To the TEMPO-oxidized pulp, 5.4 g sodium periodate (NaIO₄) was added per gram of dry fibre in a 12 g/L fibre suspension under gentle stirring further containing 6.3 vol % 2-propanol as radical scavenger to prevent side reactions. The fibres were oxidized for 45 minutes at 70 °C in the dark to further limit side reactions. The reaction was terminated by filtering off the chemicals followed by thorough washing with deionized water until the conductivity of the filtrate was <5 µeq. The total charge of the resulting material was measured by titration and found to be 450 µeq/g and the carbonyl content 3.1 mmol/g. The periodate oxidation is further illustrated in Fig. 1, step (ii).

### Example 1b

### Periodate oxidation to total charge of 1000 µeq/g from TEMPO-oxidized fibres in Example 1a

To the TEMPO-oxidized pulp in Example 1a, 2.7 g sodium periodate (NaIO₄) was added per gram of dry fibre in a 12 g/L fibre suspension under gentle stirring further containing 6.3 vol % 2-propanol as radical scavenger to prevent side reactions. The fibres were oxidized for 45 minutes at 70 °C in the dark to further limit side reactions. The reaction was terminated by filtering off the chemicals followed by thorough washing with deionized water until the conductivity of the filtrate was <5 µeq. The total charge of the resulting material was measured by titration and found to be 1000 µeq/g.

### Example 1c

### Periodate oxidation at room temperature of TEMPO-oxidized fibres in Example 1a

To the TEMPO-oxidized pulp in Example 1a, 3.15 g sodium periodate (NaIO₄) was added per gram of dry fibre in a 12 g/L fibre suspension under gentle stirring further containing 6.3 vol % 2-propanol as radical scavenger to prevent side reactions. The fibres were oxidized for 24 h in the dark to further limit side reactions. The reaction was terminated by filtering off the chemicals followed by thorough washing with deionized water until the conductivity of the filtrate was <5 µeq. The total charge of the resulting material was measured by titration and found to be 700 µeq/g and the carbonyl content 7 mmol/g.

### Example 1d

### Neutral TEMPO-mediated oxidation of fibres

TEMPO oxidation of ND BSKP was conducted in phosphate buffer (pH 6.8). Amounts of TEMPO (1 mmol), NaClO (10 mmol) and NaClO2 (100 mmol) were added and kept to react for 2.5h under gentle stirring at 60 °C. The reaction was terminated by filtering off the chemicals followed by thorough washing with deionized water and resulted in fibres with a total charge of 650 µeq/g.

### Periodate oxidation of the TEMPO-oxidized fibres in Example 1c

To the TEMPO-oxidized pulp in Example 1c, 5.4 g sodium periodate (NaIO₄) was added per gram of dry fibre in a 12 g/L fibre suspension under gentle stirring further containing 6.3 vol % 2-propanol as radical scavenger to prevent side reactions. The fibres were oxidized for 45 minutes at 60 °C in the dark to further limit side reactions. The reaction was terminated by filtering off the chemicals followed by thorough washing with deionized water until the conductivity of the filtrate was <5 µeq. The total charge of the resulting material was measured by titration and found to be 450 µeq/g and the carbonyl content 2.5 mmol/g.

### Example 1e

A neutral (pH 6.8) TEMPO-mediated oxidation of the ND BSKP resulted in a pulp material with approximately 450 µeq/g charge. The TEMPO-oxidized material was then subjected to periodate oxidation according to Example 1a. The total charge of the resulting material was measured by titration and found to be 370 µeq/g.

### Example 1f

A neutral (pH 6.8) TEMPO oxidation of the ND BSKP resulted in a pulp material with approximately 350 µeq/g charge. The TEMPO-oxidized material was then subjected to periodate oxidation. The total charge of the resulting material was not measured by titration, but in the light of the previous experiments using the same chemistry it was assessed to be in the range of 200-300 µeq/g.

### Example 2

### Periodate oxidation of carboxymethylated fibres

Carboxymethylated pulp from fully bleached softwood fibres with a charge of 1150 µmol/g was subjected to periodate oxidation. To a pulp suspension (12 g/L) further containing 6.3 vol% 2-propanol, 4.05 g NaIO₄ was added per gram of dry fibre under gentle stirring (250 rpm). The fibres were oxidized for 45 minutes at 60 °C in the dark. The reaction was terminated by filtering off the chemicals followed by thorough washing with deionized water until the conductivity of the filtrate was <5 µeq. The total charge of the resulting material was not measured by titration, but in the light of previous experiments using the same chemistry it was assessed to be in the range of 450-500 µeq/g.

### Example 3

### Periodate oxidation followed by chlorite oxidation

A suspension of ND BSKP (18 g/L) with 6.3 vol% 2-propanol was prepared and brought up to 60 °C under stirring (500 rpm). Once the suspension had reached 60 °C, NaIO₄ was added at a ratio of 4.05 g NaIO₄ per 1 g of dry fibre. The reaction was conducted under in the dark for 45 minutes and the fibres were thereafter washed with deionized water until the conductivity of the filtrate was <5 µeq. The obtained dialdehyde cellulose (DAC) was assumed to have a carbonyl content of 3 mmol/g.

### Chlorite Oxidation

The periodate oxidized fibres (i.e. DAC fibres) were subjected to partial chlorite oxidation. To a suspension of DAC fibres (9.3 g/L), sodium chlorite (NaClO₂, 2.5 mmol per 1 mmol of aldehyde) and hydrogen peroxide (H₂O₂, 2.5 mmol per 1 mmol of aldehyde) was added under gentle stirring at room temperature. The pH was brought down to 5 under gentle stirring (250 rpm) and the reaction was conducted under these conditions for 45 minutes the fibres were then washed with deionized water until conductivity of the filtrate was <5 ueq. The total charge of the resulting material was not measured by titration, but in the light of previous experiments using the same chemistry it was assessed to be in the range of 450-500 µeq/g.

### Example 4

### Periodate oxidation of phosphorylated fibres

Phosphorylated never-dried dissolving pulp with a charge of 1300 µeq/g was subjected to periodate oxidation under the following conditions. A pulp suspension (12 g/L) with 6.3 vol% 2-propanol was prepared and brought up to 60 °C under gentle stirring (250 rpm). Once the suspension reached 60 °C, NaIO₄ was added at a ratio of 5.4 g NaIO₄ per 1 g of dry fibre. The reaction was conducted in the dark for 45 minutes and then the fibres were washed with deionized water until the conductivity of the filtrate was <5 µeq. The total charge of the resulting material was not measured by titration, but in the light of previous experiments using the same chemistry it was assessed to be in the range of 450-500 µeq/g.

### Example 5

### Sheet Preparation

Paper sheets with a target grammage of 120 g/m² were prepared using a vacuum filtration set up equipped with a standard Rapid Köthen sheet former (Paper Testing Instruments, Austria) wire. The pulp suspension was protonated at pH 2 for 10 minutes in order to ensure de-swelling and consolidation of the individual fibres and fibrils prior to sheet forming. Once the paper was formed, it was either directly peeled off the forming wire or dried. If the sheet was dried, drying was conducted at room temperature or at 93 °C under vacuum (reduced pressure of 95 kPa) for 10 minutes. Subsequently, nanofibrillation was achieved via immersion of the either moist or dry paper in a NaOH solution at pH 10, and hence nanopapers were obtained.

### Comparative Example 1

### Periodate oxidation followed by TEMPO-oxidation

The procedure described in Example 1a was conducted in reversed order, i.e. periodate oxidation followed by alkaline TEMPO-mediated oxidation. During the TEMPO-oxidation the fibres swelled and fibrillated pre-maturely due to the alkaline nature of the TEMPO oxidation.

### Comparative Example 2

### Periodate oxidation, sheet formation and addition of alkali

Periodate oxidation was performed on ND BSKP without any prior TEMPO oxidation. The periodate oxidation was performed as described in Example 1a. Thereafter, sheets were formed and alkali added according to Example 5. The sheet structure was disintegrated, but the fibres did not fibrillate.

### Comparative Example 3

### Chlorite oxidation to high charge followed by periodate oxidation

To ND BSKP, periodate oxidation according to the procedure of Example 3 was conducted followed by chlorite oxidation using NaClO2 (10 mmol) and H2O2 (10 mmol) at pH 5 for 3h so that the charge of the modified fibres became 2000 µmol/g. Upon stirring the fibres fibrillated and could, thus, not be formed into a sheet on a wire.

### Characterization methods

### Pulp Characterization

The total charge of the pulp was determined via conductiometric titration using a Metrohm 702SM Titrino titrator according to the SCAN-CM 65:02 standard. The aldehyde content (assumed to be equivalent to the carbonyl content) was determined by stoichiometric reaction with hydroxylamine, which releases a stoichiometric amount of protons. The amount of protons released was then determined by titration with NaOH. Each titration was performed in triplicate.

### Fibrillation upon addition of base?

To test if the fibres fibrillate upon addition of base, the pulp was suspended in a vial under neutral pH and the pH was then adjusted to approximately 12 by the addition of NaOH. If the suspension turned completely clear and transparent (visual inspection), the fibres were considered to be fibrillated.

### Measuring the level of fibrillation

In order to quantify the amount of nanofibrillation taking place in different samples, a simple protocol was developed. The test was based on the assumption that truly liberated CNFs are colloidally stable and hence do not sediment when centrifuged in a dispersion. A 200 ml fibre suspension with a consistency of 1 g/L was brought to pH 12, divided into five conical Falcon tubes and centrifuged at 4120 RCF for 1 h. The supernatant was decanted from the tubes and the sediment was filtered using a filter membrane, 0.65 µm DVPP membrane (Merck Millipore, Burlington, MA) to be weighed after they are oven dried. Finally, the degree of fibrillation was calculated as the mass fraction found in the supernatant (i.e. fraction not found in the sediment).

### Mechanical Testing

Tensile tests were performed on samples that were 5 mm wide and 100 µm thick using an Instron 5944, equipped with a 500 N load cell, in a controlled climate of 23 °C and 50% RH. Samples were clamped with a free span of 30 mm and strained at a rate of 3 mm/min. The strain was determined by measuring the grip displacement and the Young's modulus was calculated as the slope of the initial linear part of the stress vs. strain plot, in this case in the 0.5 - 1% strain interval. A total of ten test pieces were tested per sample.

### Oxygen Permeability

The oxygen permeability was measured on 100 µm thick 5 cm² samples using a MOCON OX-TRAN 2/21 according to the ASTM D3985 and ASTM F1927 standards. The oxygen permeability measurements were performed at 23°C and 50% RH or 80% RH, using the same relative humidity on both sides of the sample. The measurements were performed in duplicates.

### Transmittance

The total transmittance (T) of the nanopapers were measured using a Shimadzu UV-2550 UV-vis spectrophotometer equipped with an integrating sphere accessory. Measurements were taken at three random points on each sample and measurements were performed in triplicates.

### Results

In Table 1 charge densities of the modified cellulose fibres as well as if the fibres can be fibrillated by addition of alkali is presented. As can be seen, fibres that can be turned into a web on a wire and thereafter fibrillated are obtained only when the chemical modification include the introduction of a chargeable moiety as well as a breakage of C2-C3 bonds.

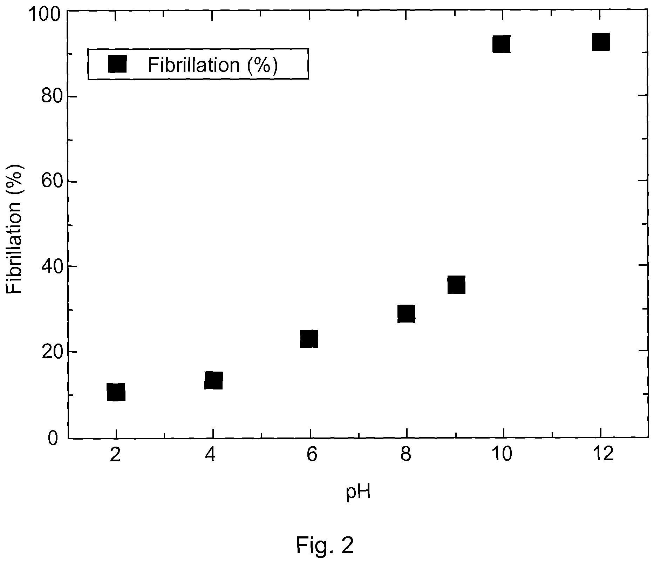

When C2-C3 bonds are broken by periodate oxidation, dialdehydes are formed. At low pH values, hemiacetals formed by the dialdehydes hold the fibre wall together despite the cumulative softening caused by the charge introduction, thus preventing the fibre wall from falling apart and thereby slipping through the formation wire. Once the web formation is completed, the sample can be exposed to high pH conditions that will synergistically hydrolyse the hemiacetal linkages and cause osmotic swelling, hence liberating the fibrils by "exploding" the fibre wall into its constituents. The pH-dependence of fibrillation of fibres modified according to the present disclosure is further illustrated in Fig. 2.

The mechanism behind the highly pH responsive fibrillation behaviour of the modified fibres is thus suggested to be primarily controlled by two parameters: the amount of charges that facilitate swelling and an opening of the fibrillar structure in the fibre wall, and the amount of hemiacetal bonds that assist in keeping the network together at higher degree of modification.

"Charged fibres" that have intact C2-C3 bonds typically require high-energy mechanical procedures, such as microfluidization or homogenization, to fibrillate due to the still existing structural integrity of the fibre wall, unless the charge density is so high that the fibres fibrillate prematurely already by the impact of the agitation during chemical modification or the subsequent sheet forming process (illustrated by comparative example 3).

**Table 1. Charge measurements and fibrillation test.**

| Table 1 | | |
|---|---|---|
| Chemical modification for introduction of a charged moiety | Charge density of the modified cellulose fibres (µmol/g) | Fibrillation upon addition of NaOH? |
| TEMPO-oxidation (Example 1a) | 450 | Yes |
| TEMPO-oxidation (Example 1b) | 1000 | Yes |
| TEMPO-oxidation (Example 1c) | 700 | Yes |
| TEMPO-oxidation (Example 1d) | 500 | Yes |
| TEMPO-oxidation (Example 1e) | 370 | Yes |
| TEMPO-oxidation (Example 1f) | 200-300 | Yes |
| Carboxymethylation (Example 2) | 450-500 | Yes |
| Chlorite-oxidation (Example 3) | 450-500 | Yes |
| Phosphorylation (Example 4) | 450-500 | Yes |
| Periodate oxidation followed by TEMPO-oxidation (Comparative Example 1) | 400 | Pre-mature fibrillation |
| Only periodate oxidation (Comparative Example 2) | N.A. | No |
| Chlorite oxidation (Comparative Example 3) | 2000 | Pre-mature fibrillation |

In Table 2 dewatering times for fibres modified according to the present disclosure (Example 1a) as well as reference values reported elsewhere for unmodified or chemically modified CNF are presented. In the latter case, the chemical modification was conducted prior to fibrillation (ref. 1-3). Further, a nanopaper was formed from the fibres of the present disclosure according to the procedure of Example 5. The mechanical, barrier and optical properties of this paper was compared to those of the nanopapers prepared from CNF (see ref. 1-3).

The nanopaper produced from fibres from Example 1a exhibited comparable mechanical and barrier properties as well as transparency to those of nanopapers produced from the different types of CNF reported previously. These results demonstrate that nanopapers can be produced much faster compared with conventional techniques without having to sacrifice performance.

Moreover, since the fibres are dewatered prior to nanofibrillation, a lower amount of water is present during transport compared with CNF suspensions used for nanopaper production. In fact, it is even so that the pH induced nanofibrillation can be performed on dried modified fibre sheets according to the invention (confirmed by SEM images, data not shown), which is beneficial since no excess water needs to be transported together with the fibres and fibrillation can be performed off-site.

**Table 2. Measurements of dewatering time of modified fibres (Example 1a), and mechanical properties as well as OTR and transmittance of sheet comprising cellulose fibrils. As well as comparison with previous reported values (Ref. 1-3).**

| Table 2 | | | | | | | |
|---|---|---|---|---|---|---|---|
| Chemical Pretreatment | Particle type at dewatering | Dewater. Time | Tensile Strength (MPa) | Young's Modulus (GPa) | Strain to failure (%) | O₂ Permeab. (50% RH) (cm³ µm m⁻² d⁻¹ kPa⁻¹) | T (%) |
| None ¹ | CNFs | 60 min | 121 | 8.1 | 7.9 | 0.6 | - |
| TEMPO ox.² | CNFs | 2 days | 178 | 10 | 5.1 | 0.049 | 87 |
| Carboxymethyl. ³ | CNFs | >1 day | - | - | - | 0.85 | 90 |
| Example 1a | Pulp fibres | 0.17 min^{a} | 132^{b} | 7.3^{b} | 1.9^{b} | 1.23^{b} | 87^{b} |

| | | | | | | | |
|---|---|---|---|---|---|---|---|
| ^{a}Modified fibres according to Example 1a; ^{b}Measured on a sheet prepared from the modified fibres of Example 1a according to Example 5 ¹ Osterberg, M. et al. A Fast Method to Produce Strong NFC Films as a Platform for Barrier and Functional Materials. ACS Appl. Mater. Interfaces 5, 4640-4647 (2013). ² Fujisawa, S., Okita, Y., Fukuzumi, H., Saito, T. & Isogai, A. Preparation and characterization of TEMPO-oxidized cellulose nanofibril films with free carboxyl groups. Carbohydr. Polym. 84. ³ Aulin, C., Gällstedt, M. & Lindström, T. Oxygen and oil barrier properties of microfibrillated cellulose films and coatings. Cellulose 17, 559-574 (2010). | | | | | | | |

## Claims

1. A method of producing a sheet comprising fibrillated cellulose, comprising the steps of:
a) chemically modifying cellulose fibres to introduce a chargeable moiety and break the C₂-C₃ bond in at least part of the D-glucose units so as to obtain modified cellulose fibres having a charge density measured according to SCAN-CM 65:02 of 150-1500 µeq/g;
b) forming a fibre web by dewatering a slurry comprising the modified cellulose fibres; and
c) adding a base to the fibre web so as to obtain the sheet comprising fibrillated cellulose.

2. The method according to claim 1, wherein a dialdehyde is formed when the C₂-C₃ bond is broken.

3. The method according to claim 2, wherein step a) comprises periodate oxidation to break the C₂-C₃ bond.

4. The method according to any one of the preceding claims, wherein the chargeable moiety is introduced in step a) by oxidation, carboxymethylation, phosphorylation or sulfonation.

5. The method according to claim 4, wherein the oxidation is TEMPO oxidation or chlorite oxidation.

6. The method according to any of the preceding claims, wherein the introduction of the chargeable moiety is followed by periodate oxidation to break the C₂-C₃ bond in step a).

7. The method according to claim 5, wherein step a) comprises chlorite oxidation to introduce the chargeable moiety subsequent to the periodate oxidation.

8. The method according to any one of the preceding claims, wherein the carbonyl content of the modified cellulose fibres is 1.0-7.0 mmol/g, such as 1.5-6.0 mmol/g.

9. The method according to any one of the preceding claims, wherein the modified cellulose fibres have a charge density measured according to SCAN-CM 65:02 of 200-900 µeq/g, such as 250-700 µeq/g.

10. The method according to any one of the preceding claims, wherein step c) comprises adding an aqueous composition comprising the base onto the fibre web, e.g. by spraying.

11. The method according to claim 10, wherein the pH of the aqueous composition is 9.5-14, such as 10-14, such as 11-14, such as 12-14.

12. The method according to claim 10 or 11, wherein the aqueous composition further comprises a polymer, such as starch, carboxymethylated cellulose (CMC) or polyvinyl alcohol (PVOH).

13. The method according to any one of claims 10-12, wherein:
a size press is used for the addition of the aqueous composition and the viscosity of the aqueous composition is 10-1000 mPas, preferably 10-300 mPas;
a curtain coater or a direct rod coater is used for the addition of the aqueous composition and the viscosity of the aqueous composition is 100-800 mPas; or
a blade coater is used for the addition of the aqueous composition and the viscosity of the aqueous composition is 400-1500 mPas,
and wherein the viscosity is measured as dynamic viscosity with a Brookfield rotational viscometer using spindle no.4 at 100 rpm and 25 °C.

14. Method according to any one of the preceding claims, wherein the pH of the slurry of step b) is below 9, such as 8 or lower.

15. Method according to any one of the preceding claims, wherein the fibre web in step b) is dried to a dry content of below 30 wt.%, such as below 20 wt.%, such as below 15 wt.%, after dewatering and prior to conducting step c).
